# EUROPEAN PATENT APPLICATION

(11) **EP 0 893 768 A2**
(43) Date of publication of application: **27.01.1999**
(21) Application number: 98440159.6
(22) Date of filing: 20.07.1998
(51) Int. Cl.: G06F 13/42, G06F 1/04, G06F 13/16

(54) **An implementation system of an elastic memory**

(30) Priority: 25.07.1997 IT TO970675
(71) Applicant: ALCATEL ALSTHOM COMPAGNIE GENERALE D'ELECTRICITE, 75008 Paris (FR)
(72) Inventor: Cucchi, Silvio, 20083 Gaggiano (MI) (IT); Giacomuzzi, Daniela, 23877 Paderno d'Adda, (Lecco) (IT)
(74) Representative: Schätzle, Albin, Dipl.-Phys.

(57) **Abstract**

An implementation system of an elastic memory, where said memory receives an input data flow associated with an input clock signal and provides an output data flow associated with an output clock signal. According to the present invention a circuit is provided to supply a non-correlated clock signal (CKM), that, associated with memory management means (16,116) and transfer means (P), allows for memory read and write cycles (12,102) at a rate not bound to the frequencies of input and output data flows.

## Description

The present invention relates to an elastic memory system and relating managing method, where said memory receives an input data flow associated with an input clock signal and provides an output data flow associated with an output clock signal.

'Elastic memory' denomination usually means a type of memory receiving an input data flow and providing an output data flow, which makes available, i.e. it allocates its memory resources according to the rate of said flows, in an elastic way.

Management of elastic memories concerns many data management and transmission systems.

Specifically, for instance, an elastic memory is used for the interfacing of asynchronous machines, which make use for said purpose of a memory that may be a random access type (RAM) or a shift register, receiving input data write cycles from the first machine according to a clock signal of the first machine and data read cycles from the second machine according to a clock signal of the second machine.

Generally, to perform such a procedure it is necessary to allocate a memory block, wherein input cycles to the memory are addressed, and to allocate for each memory block a counter for the write pointer, a counter for the read pointer and a phase comparator for overflow management, i.e. overflows of the allowed capacity. Therefore, a considerable amount of resources has to be allocated for each memory block, with a waste of memory resources and limitations about integrating the memory blocks in one 'chip' alone.

Moreover, since each counter is controlled by a different clock signal belonging to the input and output data flows, as well as associated with the read and write cycles, it appears that the necessarily memory blocks operate according to the frequencies of said data flows, thus limiting usage flexibility of the memory banks. As a result, if a second data flow needs for instance to be managed at an average frequency differing from the input and output frequency of the first data flow, it will be necessary to use another memory even if the elastic memory still owns resources to allocate for the management of said second data flow, since the average operating frequency of the first elastic memory cannot be changed.

An object of the present invention is to solve the above mentioned inconveniences and indicate an implementation system for an improved and more efficient elastic memory compared to the solutions already known.

In this frame, it is the main object of the present invention to provide an implementation system of an elastic memory, which allows for reducing the resources allocated for the read and write cycles in the memory and the control circuits of the read and write cycles.

A further object of the present invention is to provide an implementation system of an elastic memory capable of managing data flows operating at different frequencies by means through the same elastic memory.

According to the present invention an implementation system of an elastic memory and a management method of an elastic memory are indicated incorporating the characteristics of the annexed claims, which are integral part of this description.

Further objects, characteristics and advantages of the present invention will become apparent from the detailed description hereunder and annexed drawings, which are only supplied by way of explanatory not limiting example, where:
- Fig. 1 shows a schematic block diagram of an implementation system of an elastic memory according to the known state of art;
- Fig. 2 shows a schematic block diagram of an implementation system of an elastic memory according to the present invention;
- Fig. 3 shows a block diagram of an embodiment of an implementation system of an elastic memory according to the present invention;
- Fig. 4 shows a first detail of the implementation system of the elastic memory according to Fig. 3;
- Fig. 5 shows a second detail of the implementation system of the elastic memory according to Fig. 3;
- Fig. 6 shows a third detail of the implementation system of the elastic memory according to Fig. 3.

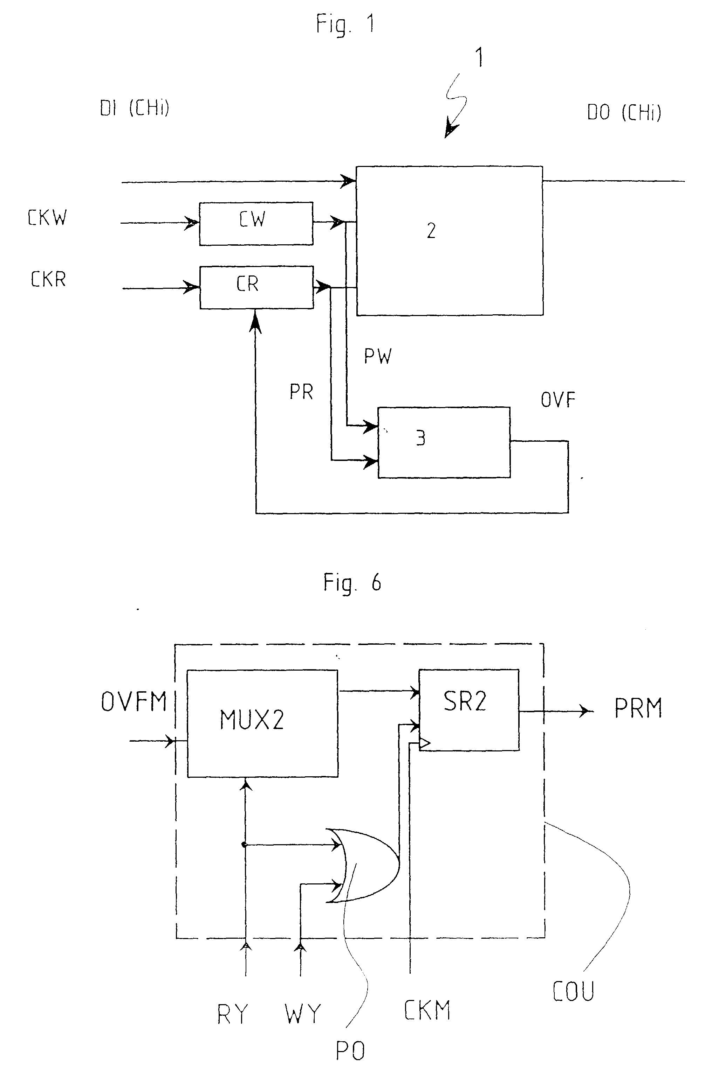

Fig. 1 shows an implementation system of an elastic memory 1 according to the known state of art. Implementation system of an elastic memory 1 consists of a memory block 2 receiving at its input write data Dl and providing at its output read data DO.

For a better understanding of the following description, it is pointed out that the write data Dl and the read data DO belong to a same channel CHi among a plurality of channels CHn, carrying the data flow .

The implementation system of an elastic memory 1 is also equipped with a write counter CW, which receives at its input a write clock signal CKW and provides at its output a write pointer PW, so as to perform the address operation of the write data Dl to the various memory locations according to the frequency of the write clock signal CKW. Similarly, the implementation system of an elastic memory 1 is equipped with a read counter CR receiving at its input a read clock signal CKR and providing at its output a read pointer PR. Write pointer PW and read pointer PR are sent to the input of memory 2, as well as they are sent to the input of a phase comparator 3 providing an output overflow signal OVF, i.e. a full memory signal indicating that the write pointer PW and the read pointer PR overlap.

Therefore, said implementation system of an elastic memory 1 requires availability of a memory block 2, a write counter CW , a read counter CR and a phase comparator 3 for each channel CHi allocated for the data flow to be managed.

Said implementation system of an elastic memory 1 also requires that the write and read signals correlate their frequency value to the read and write frequencies of the memory block 2 associated with channel CHi.

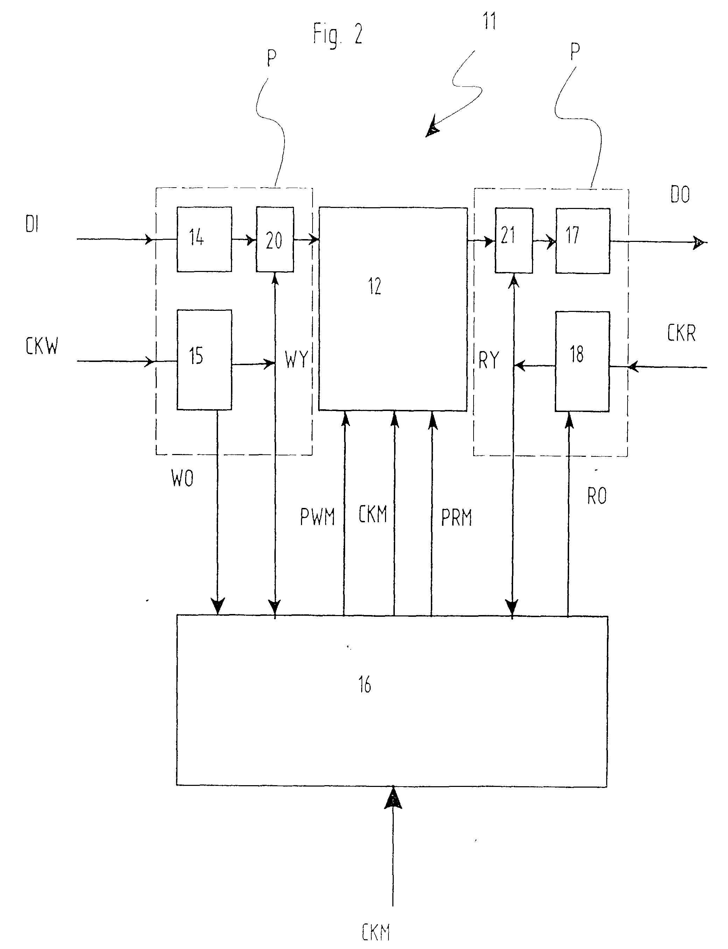

Fig. 2 shows an implementation system of an elastic memory 11 according to the present invention.

Said implementation system of an elastic memory 11, with reference to the generic channel CHi, similarly as shown in fig. 1, uses a memory block 12 receiving at its input write data Dl and supplying at its output read data DO. On their path the write data Dl and read data DO pass through two transfer blocks P. More precisely, the write data Dl enters initially a temporary storing block 14, where it is temporarily stored. The temporary storing block 14 is associated with a buffer 20, i.e. a separating circuit controlled by a write enable signal WY through a control means 15, which receives in its turn the write clock signal CKW on an input gate.

A similar structure is repeated at the output of the memory block 12, comprising a further temporary storing means 17, downstream of a buffer 21, where the read data DO is stored. A control means 18 is also provided to control the temporary storing means 17, which receives the read clock signal CKR on an input gate.

A memory management means 16 is also provided, which receives at its input a main clock signal CKM that may be generated eg. by a separate circuit or recovered from a clock signal available in the chip. Said main clock signal CKM is independent, i.e. non-correlated, from the write clock signal CKW and the read clock signal CKR, and it operates at a substantially higher frequency, eg. four times the frequency of the read and write signals, if a single channel is used.

Therefore, memory management means 16 is driven by said main clock signal CKM and it sends a signal of writing opportunity WO to control means 15 according to the higher frequency of said main clock signal CKM, as well as a reading opportunity signal RO to control means 18.

The memory management means 16 also provides the relevant read pointers PWM and write pointers PRM to the memory block 12 in a synchronous way with the write enable signal WY and read enable signal RY, and consequently with the clock signal CKM.

Finally, the memory management means 16 internally checks the phase between the write pointers PWM and read pointers PRM, and in case of an overlapping event it will output an 'overflow' alarm signal OVFM, apt to reposition the pointers.

Therefore, the implementation system of an elastic memory 11 receives at its input the write data Dl, which is associated with the write clock signal CKW, and sends to control means 15 a write request in the memory block 12. The action of control means 15 on buffer 20 determines the write data Dl to remain stored in the temporary storing means 14, till the control means 15 will issue a write enable signal WY associated with a write pointer PWM. Thus, the write data Dl can enter the memory block 12. As regards the read cycles the control means 18 receives a read request according to the read clock signal CKR and is enabled to produce a read enable signal RY acting on buffer 21 through the read opportunity signal RO, so that the read data DO is now available for a reading operation.

Write enable signals WY and read enable signals RY are also sent to the memory management means 16, which uses them first of all to drive the issuing of the the write address pointers PWM and read address pointers PRM to the memory block 12.

It should be remembered that the main clock signal CKM has a higher frequency, which can be ,as already mentioned, four times the frequency of read and write clock signals CKR and CKW. As a result, the main clock signal CKM provides various opportunity signals WO for each cycle of the write clock signal CKW, which represent different opportunities for allocating input data Dl in the memory block 12. It is obvious that since the frequency values of the main clock signal CKM, that control the read and write cycles in the memory block 12 through the memory management means 16 differs to such an extent from the write and read clock signals CKW and CKR, several read or write opportunities are not exploited by channel CHi.

It is consequently apparent that the memory management means 16 can handle several channels CHi in parallel making use of the same memory block 12, provided that the frequency of the main clock signal CKM is sufficiently high to warrant the number of write and read opportunities as required for each channel CHi.

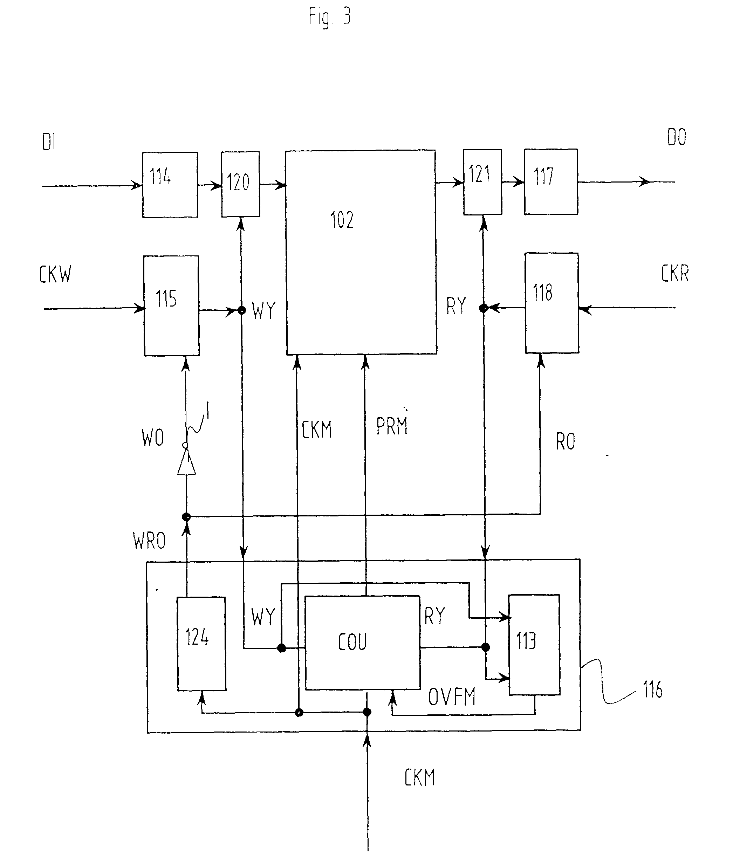

Fig. 3 describes a possible embodiment of the implementation system of elastic memory 11, where a memory block 102 is shwon, controlled by a memory management means 116. Such memory management means 116 receives at its input the main clock signal CKM, which reaches also the input of a signal generating means 124, providing an output opportunity signal WRO. The main clock signal CKM is led to the input of a counter block COU providing at its output the read address pointer PRM. Finally, a comparing means 113 generating the overflow signal OVFM is provided. The counter block COU also receives at its input the write enable signal WY from a control means 115. Said control means 115 receives at its input the write clock signal CKW and the write opportunity signal WO, which is obtained by negating the opportunity signal WRO provided by the signal generating means 124 through an inverting means I. A corresponding control means 118 is provided for read cycles and receives the write opportunity signal RO, which is obtained by the opportunity signal WRO. As a result, both the write enable signal WO and read enable signal RO are complementary signals. As described in Fig. 2, control means 115 and 118 drive through their respective write enable signals WY and read enable signals RY corresponding buffer circuits 120 and 121, which hold write data Dl and read data DO in their respective temporary storing means 114 and 117.

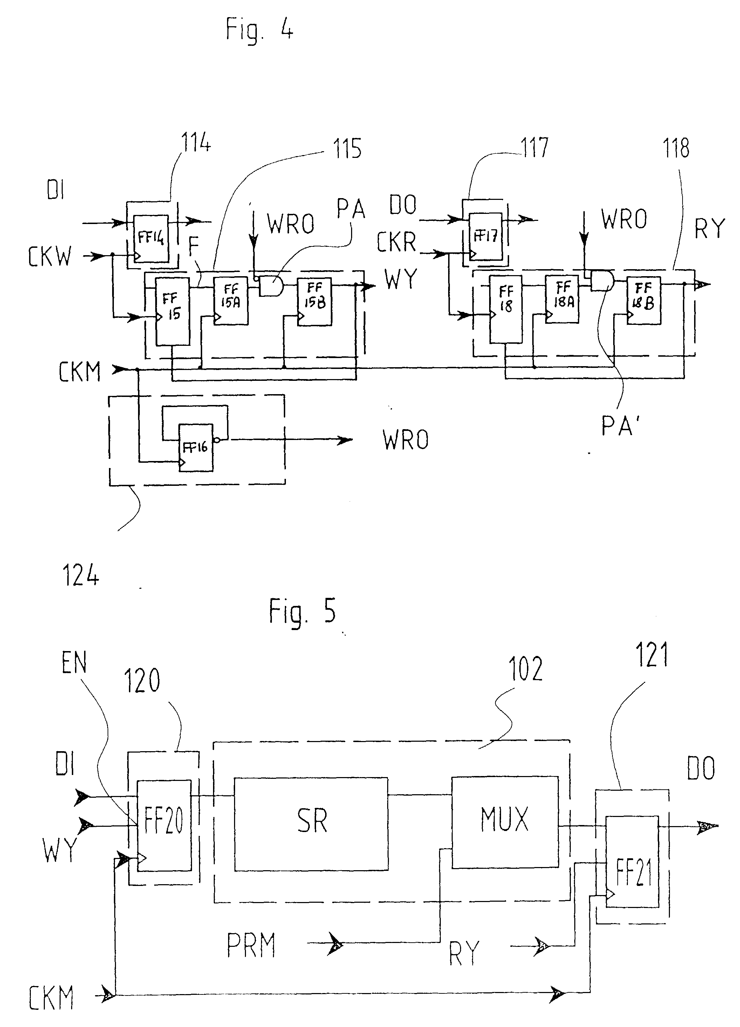

In this embodiment the memory block 102 is obtained through a shift register SR, as shown in Fig. 5, that shows said memory block 102 associated with buffer circuits 120 and 121. For this reason no write address pointer PWM is provided. As a matter of fact, the shift register SR sequentially inputs data Dl in its memory cells wherefrom said data Dl are sequentially conveyed to the output of the shift register SR. Therefore there is no possibility nor need to associate a write address PWM with the data as it would happen in case a RAM (Random Access Memory) should be used.

Fig. 4 shows the logic circuit of the temporary storing means 114, control means 115, temporary storing means 117 and control means 118. The signal generating means 124 as part of the memory management means 116 is also shown.

As it can be seen, the temporary storing means 114 consists of a so-called 'D' type flip-flop FF14, i.e. a flip-flop that provides to its output the logic signal at its input applying a time delay, which at its signal input receives input data Dl and provides it at its output according to the write clock signal CKW. Said write clock signal CKW is also sent to a flip-flop FF15, whose signal input is always maintained at a high logic level till it is reset by the data Dl write operation in the memory and giving a signal F at its output, whose high logic level indicates the presence of the data Dl in the flip-flop FF14. The flip-flop FF15 jointly with flip-flops FF15A, FF15B and an AND gate PA forms the control means 115. The independent main clock signal CKM drives a flip-flop FF16 forming the signal generating means 124, which supplies the output opportunity signal WRO to the control means 115 where it is negated through the inverting input of the AND gate PA and constitutes the write opportunity signal WO. The opportunity signal WRO is also sent to the control means 118, where it constitutes the write opportunity signal RO. Moreover, the main clock signal CKM also drives according to its own frequency the advancement of signal F, making this through both flip-flops FF15A and FF15B in cascade connection, separated by the AND gate PA. The AND gate PA receives on the other input the write opportunity signal WO. Therefore, the write enable signal WY is output from flip-flop FF15B and consequently from the control means 115.

As shown in Fig. 3 said write enable signal WY is sent to buffer 120. Said write enable signal WY is also sent to a reset input on flip-flop FF15, so as to reset the output of said flip-flop FF15, thus signalling the completion of the writing operation in the memory block 102.

Similarly for the read cycles, there is a temporary storing means 117 obtained through a flip-flop FF17 receiving read data DO and read clock signal CKR, and a control circuit 118 similar to the control circuit 115, save for a gate AND PA' where the input for the opportunity signal WRO appears as non-negated to produce the correct write opportunity signal RO. Thus, the read and write cycles on the same channel CHi occur during different periods of the main clock signal CKM.

Fig. 5 shows the memory 102 consisting of a 72-bit shift register with enable SR, and a multiplexer MUX. Multiplexer MUX is specifically used for the read cycles of shift register SR and receives at its input the read pointer PRM, then providing at its ouput the read data DO to the temporary storing means 17 through a flip-flop FF21 driven by the read enable signal RY. Flip-flop FF21 works in the same way as the buffer 121 illustrated in Fig. 3.

As it is well known, shift register SR is a device consisting of a flip-flop cascade connection, with a signal input for the clock signal and an enable input. In order to allow a better understanding of the operation of the implementation system of the elastic memory, flip-flop FF20, namely the first of the flip-flop cascade of the shift-register SR is highlighted, as it performs the function of buffer 120.

As a matter of fact, shift register SR receives at its input write data Dl, and stores the write data Dl upon receiving the write enable signal WY on an enable input EN placed on the first flip-flop FF20. Therefore, enable input EN of the shift register SR performs the function of the driving input of buffer 120 shown in Fig. 3. Shift register SR cycles are also set by the main clock signal CKM.

Fig. 6 illustrates the counter COU consisting of a multiplexer block MUX2, which receives at its input the overflow signal OVFM and provides through a shift register SR2 the output signal PRM whose first enable input is driven through an OR gate PO by the write enable signal WY and the read enable signal RY, thus preventing also in this instance the contemporary occurrence of read and write cycles. The overflow signal OVFM is generated by the phase comparator circuit 113 not shown in detail but which can be obtained eg. through two AND gates receiving at their inputs the write enable signal WY and write enable signal RY respectively and the memory overflow values.

The features of the present invention as well as its advantages are apparent from the above description.

The implementation system of an elastic memory as described above by way of example offers the advantage of having a non-correlated clock signal driving the read and write cycles in the elastic memory. The main result is that the elastic memory is not bound for the read and write cycles to the frequencies of the input and output data flows, provided they are substantially lower than the frequency of the non-correlated clock signal.

This allows to use a same memory with different functionalities and high flexibility,since, due to the much higher frequency of operation, the time allocated by the managing resources can be distributed among more channels allocating a number of time opportunities to one channel and a number of opportunities to another channel, while using a same managing device operating in time sharing.

Advantageously, the memory block and the managing circuits can be ideally regarded as one object alone from a logical and circuital standpoint, which only needs to receive the suitably high frequency clock signal and the data to be handled. All this is extremely beneficial for design flexibility.

Advantageously, it is also possible to reduce the circuit resources allocated for each channel, some of them being also included in the memory management means, such as the pointer counters. This leads to a reduced number of gates on the 'chip', which reduction may even reach 15%.

Moreover, using a clock signal frequency for the control of the read and write cycles independently from the data flows frequencies allows the use of a same memory bank for two or more data flows at different frequencies. This was not previously possible, since the operation frequency of the whole memory was determined by the data flow frequency. A further incoming data flow had to be managed in another memory bank.

An advantageous variantn is obtained by adding a micro-processor for the control of the memory managing means to achieve an elastic memory that not only manages two data flows, but allocates dynamically the space in the memory according to the frequency changes of said flows.

A further option may use the implementation system of the elastic memory according to the present invention to obtain a bi-directional elastic memory, i.e. a system to manage a data flow from a first machine to a second machine and a data flow from the second machine to the first one through the same memory bank shared by the two data flows.

The main clock signal may be generated either through a signal generator especially provide for or obtained through transformation of another clock signal already available for other purposes in the circuits, e.g. through frequency division.

## Claims

1. An elastic memory system, where said memory receives an input data flow associated with an input clock signal and provides an output data flow associated with an output clock signal, characterized in that a circuit is provided to supply a non-correlated clock signal (CKM) associated with memory management means (16,116) and transfer means (P) to allow memory read and write cycles (12,102) not bound to the frequencies of input and output data flows.

2. An implementation system of an elastic memory according to Claim 1, characterized in that the frequency of the non-correlated clock signal (CKM) is chosen higher than the frequency of the write clock signal (CKW) and of the read clock signal (CKR).

3. An implementation system of an elastic memory according to Claim 2, characterized in that the non-correlated clock signal (CKM) is supplied to the memory block (12, 102) through memory managing means (16, 116) and both input and output transfer means (P) are provided to drive the read and write cycles in said memory block (12, 102) according to the non-correlated clock signal (CKM).

4. An implementation system of an elastic memory according to Claim 3, characterized in that the transfer means (P) are provided with first temporary storing means (14,20; 114,120) for input data (DI) and second temporary storing means (17,21; 117,121) for output data (DO), controlled by their respective control means (15,18; 115,118) through a respective write or read enable signal (RY, WY).

5. An implementation system of an elastic memory according to Claim 4, characterized in that the memory managing means (16, 116) supply an address pointer (PWM, PRM) to the elastic memory and a read or write opportunity signal (WO, RO) to the control means (15,18; 115,118) and that said control means (15,18; 115,118) send the write or read enable signal (RY, WY) according to said read or write opportunity signal (WO; RO).

6. An implementation system of an elastic memory according to Claim 5, characterized in that the control means (15,18; 115,118) also send the write or read enable signal (RY, WY) to the memory managing means (16; 116).

7. An implementation system of an elastic memory according to Claim 5, characterized in that said memory managing means (16, 116) are structured in such a way to handle several channels (CHi) of the elastic memory (12, 102).

8. An implementation system of an elastic memory according to Claim 7, characterized in that the memory block (102) is obtained through a shift register (SR).

9. An implementation system of an elastic memory according to any of the previous Claims, characterized in that the control means (115; 118) and the temporary storing means (114; 120, 117, 121) are obtained through flip-flop circuits (FF15, FF15A, FF15B, FF18, FF18A, FF18B, FF20, FF21).

10. An implementation system of an elastic memory according to Claim 9, characterized in that the memory managing means (116) contain a counter (COU), which provides the memory block (102) with only the read address pointer (PRM), a signal generating means (124) and a phase comparator (113).

11. An implementation system of an elastic memory according to Claim 3, characterized in that the memory managing means (16, 116) contains a comparator means (3, 113), which produces a signal (OVFM) apt to reposition the address pointers (PRM).

12. An implementation system of an elastic memory according to Claim 3, characterized in that the non-correlated clock signal (CKM) and the transfer means (P) allow for making the read and write cycles in the memory block (12,102) independent from the frequency of the input and output data flows, so as to handle separate data-flows associated with different frequencies.

13. An implementation system of an elastic memory according to Claim 3, characterized in that the non-correlated clock signal (CKM) and the transfer means (P) allow for making the read and write cycles in the memory block (12,102) independent from the frequency of the input and output data flows, to allow bidirectional handling of one or more data flows.

14. An implementation system of an elastic memory according to Claim 10, characterized in that a part of the temporary storing means (120,121) is obtained through flip-flop circuits (FF20,FF21) belonging to the shift register (SR).

15. An implementation system of an elastic memory according to Claim 10, characterized in that the memory managing means (16, 116) generate an opportunity signal (WRO) through the signal generator (124), wherefrom read and write opportunity signals (WO; RO) are obtained through an inverter means (I).

16. A managing method of an elastic memory, where said memory is of the type which receives an input data flow associated with an input clock signal and provides an output data flow associated with an output clock signal, characterized in that it is provided with a non-correlated clock signal (CKM) and it further provides the following steps:
- the non-correlated clock signal (CKM) drives the read and write cycles at a higher frequency than the frequency of the read clock signal (CKR) and write clock signal (CKW);
- a write or read cycle is requested with the frequency of the read clock signal (CKR) or write clock signal (CKW);
- an enable cycle signal (RY,WY) is provided according to the frequency of the non-correlated clock signal (CKM).

17. A managing method of an elastic memory, where said memory receives an input data flow associated with an input clock signal and provides an output data flow associated with an output clock signal, characterized in that it provides a non-correlated clock signal (CKM) and the non-correlated clock signal (CKM) drives the operation of the memory and transfer means (P) of the input and output data flow.
